# EUROPÄISCHE PATENTSCHRIFT

(11) **EP 1 176 866 B1**
(45) Veröffentlichungstag und Bekanntmachung des Hinweises auf die Patenterteilung: **26.11.2003**
(21) Anmeldenummer: 00938620.2
(22) Anmeldetag: 28.04.2000
(51) Int. Cl.: A01J 7/02

(54) **VERFAHREN ZUR REINIGUNG VON MELKANLAGEN**
METHOD FOR CLEANING MILKING DEVICES
PROCEDE DE NETTOYAGE DE MACHINES A TRAIRE

(30) Priorität: 07.05.1999 DE 19921136
(43) Veröffentlichungstag der Anmeldung: 06.02.2002
(73) Patentinhaber: Ecolab Inc., St. Paul, MN 55102-1390 (US)
(72) Erfinder: SCHWARZ, Peter, D-40699 Erkrath (DE)
(74) Vertreter: Sternagel, Fleischer, Godemeyer & Partner Patentanwälte
(86) Internationale Anmeldenummer: EP0003851
(87) Internationale Veröffentlichungsnummer: WO00067561

(56) Entgegenhaltungen:
- EP-A- 0 761 091
- EP-A- 0 772 971
- DE-A- 4 208 066
- DE-A- 19 804 829
- US-A- 5 405 452

## Beschreibung

Die im folgenden beschriebene Erfindung liegt auf dem Gebiet der Reinigung von Geräten, die mit Milch in Berührung kommen und betrifft insbesondere die Reinigung von Melkanlagen.

Nach dem Stand der Technik werden zur Reinigung von Geräten, die mit Milch in Berührung kommen, insbesondere zur Reinigung von Melkanlagen, stets mehr oder weniger stark alkalische oder saure Reinigungslösungen verwendet. Durch Anwendung dieser Reinigungslösungen sollen sowohl fetthaltige als auch proteinhaltige Rückstände aus den Geräten, Leitungen und Behältern entfernt werden. Eine möglichst vollständige Entfernung ist wünschenswert, da ansonsten diese Rückstände als Nährböden für Bakterien und andere Keime dienen können, die dann zu einer Verunreinigung der später verarbeiteten Milch führen. Die Reinigungslösungen werden aus diesem Grund vor der Einwirkung auf die zu reinigenden Geräte erhitzt, um die Reinigungsleistung zu steigern. In vielen Fällen werden zusätzlich aktivchlorabspaltende Mittel in den Reinigungslösungen eingesetzt, die neben einer zusätzlichen Reinigung auch eine desinfizierende Wirkung beisteuern. Auch andere antimikrobiell wirksame Substanzen, insbesondere quartäre Ammoniumverbindungen können in diesen Reinigungslösungen eingesetzt werden. Nach Entfernung der Reinigungslösungen aus den Geräten werden diese in der Regel gespült. In vielen Fällen wird anschließend noch ein zusätzlicher Desinfektionsgang eingeschaltet, bei dem die Geräte mit einer Lösung eines wirksamen Desinfektionsmittels behandelt und gegebenenfalls nochmals gespült werden.

Es war lange Zeit üblich, die Reinigungslösungen jeweils vor Gebrauch frisch anzusetzen und nach erfolgter Reinigung der Geräte in das Abwasser abzulassen. Wegen des hohen Verbrauchs an Chemikalien, Wasser und Energie sind in jüngerer Zeit sogenannte Stapelverfahren entwickelt worden, bei denen die Reinigungslösung unter bestimmten Umständen wiederverwendet werden kann. So wird beispielsweise in der amerikanischen Patentschrift 5,405,452 ein Verfahren beschrieben, bei dem es durch eine ausreichend lange Vorspülung der Melkanlage möglich wird, die im nachfolgenden Reinigungsschritt verwendete alkalische Reinigungslösung nach Gebrauch wieder aufzufangen und erneut bei späteren Reinigungsvorgängen zu verwenden. Ein ähnliches Verfahren wird in der europäischen Patentanmeldung 772 971 vorgeschlagen, wobei hier zum Vorspülen eine wäßrige Lösung verwendet wird, die durch Auffangen des Desinfektionsmittels aus dem späteren Desinfektionsgang einen sauren pH-Wert aufweist.

Bei der Reinigung von Geräten zur Milchgewinnung, insbesondere bei der Reinigung von Melkanlagen, mit alkalischen Reinigungslösungen traten Schwierigkeiten vor allem an schlecht durchströmten Teilen, wie beispielsweise Milchmengenzählern, in Form von hartnäckigen Belägen auf. Besonders störend wurden derartige Beläge bei den Verfahren, in denen die alkalische Reinigungslösung wiederverwendet (gestapelt) wurde. Die Vorteile des Stapelverfahrens wurden dadurch zumindest zum Teil zunichte gemacht, da es immer wieder notwendig wurde, die besonders anfälligen Teile der Geräte einer besonderen Zwischenreinigung zu unterziehen, die den ansonsten weitgehend automatisierten Verfahrensablauf unterbrach.

Die deutsche Patentanmeldung 198 04 829.7-41 versucht, dieses Problem durch Einsatz einer sauren Reinigungslösung zu lösen Demnach ist es möglich, mit sauren Reinigungslösungen auch ohne besondere Zusätze, wie beispielsweise Enzyme oder peroxidische Verbindungen, Melkanlagen so gründlich zu reinigen, daß die Verwendung anderer Reinigungslösungen, insbesondere alkalischer Reinigungslösungen, vollkommen entbehrlich wird. Dabei werden überraschenderweise auch die im Stapelverfahren so störenden hartnäckigen Beläge in Problemzonen vollständig vermieden.

Nach dem eigentlichen Reinigungsgang wird die Anlage mit Frischwasser gespült und anschließend mit einer wäßrigen Lösung eines geeigneten Desinfektionsmittels desinfiziert. Hieran kann sich eine erneute Nachspülung mit Frischwasser anschließen. Im Rahmen des Stapelverfahrens fängt man die vereinigten Spül- und Desinfektionsmittellösungen in einem Vorspültank auf und verwendet diese Flüssigkeit im nächsten Reinigungszyklus zur Vorspülung der Anlage, bevor erneut eine Reinigung mit Reinigungslösung erfolgt. Hierdurch wird Frischwasser eingespart und die Anlage besonders effizient vorgespült, da die vereinigte Nachspül- und Desinfektionsmittellösung zum zweiten Mal verwendet werden kann und noch Reste des Reinigungsmittels enthält.

Ein Reinigungszyklus bei der Stapelreinigung umfaßt also folgende Schritte:
Vorspülung der Anlage mit aufgefangenem Spülwasser und Desinfektionsmittellösung,
Reinigung der Anlage mit der (wiederverwendeten) Reinigungslösung,
Spülung mit frischem Spülwasser,
ggf. Desinfektion mit einer wäßrigen Lösung eines Desinfektionsmittels,
ggf. erneute Spülung mit frischem Spülwasser.

Die Reinigungslösung wird nach dem Reinigungsgang wieder in einem Vorratstank aufgefangen und kann in der Regel wenigstens 6 mal, in geeigneten Fällen auch über 14 mal zur Reinigung wieder verwendet werden, ehe sie durch frische Reinigungslösung ersetzt werden muß. Spülwasser und ggf. die Desinfektionsmittellösung werden in einem Vorspültank aufgefangen und im nächsten Zyklus zur Vorspülung der Anlage verwendet.

Selbst wenn in den Vorspültank immer wieder frische Desinfektionsmittellösung gelangt, wurde festgestellt, daß sich mit zunehmender Zeit der mikrobiologische Zustand des Vorspülwassertanks verschlechtert und es zu einer Schleimbildung (Biofilme) in diesem Behälter kommt. Diese Biofilme werden bei der Vorspülung mit diesem Wasser an die zu reinigenden Geräte transportiert und begünstigen dort die Anhaftung von weiteren Schmutzpartikeln. Hierdurch verschlechtert sich mit der Zeit das Reinigungsergebnis trotz ausreichend hoher Konzentration der Reinigungslösung, ausreichender Reinigungszeit, hoher Reinigungstemperatur und ausreichender Strömungsmechanik.

Daher besteht der Bedarf, den mikrobiologischen Zustand im Vorspültank über längere Zeit unter Kontrolle zu halten.

Demnach betrifft die Erfindung ein Verfahren zur Reinigung von Melkanlagen unter Verwendung einer Vorspüllösung und einer wäßrigen Reinigungslösung, bei dem diese wäßrige Reinigungslösung wenigstens zum Teil nach erfolgter Reinigung der Anlage aufgefangen und nach erneutem Gebrauch der Melkanlage wiederum zur Reinigung verwendet wird und bei dem nach dem Reinigungsschritt mit Spülwasser und fakultativ mit einer Lösung eines ersten Desinfektionsmittels nachgespült wird, Spülwasser und, falls verwendet, erste Desinfektionsmittellösung jeweils wenigstens zum Teil in einem Vorspültank aufgefangen und im nächsten Reinigungszyklus als die genannte Vorspüllösung verwendet werden, dadurch gekennzeichnet, daß man in diese Vorspüllösung im Vorspültank eine Quelle für ein zweites Desinfektionsmittel einbringt, aus der eine im wesentlichen konstante Menge zweites Desinfektionsmittel pro Zeiteinheit in die Vorspüllösung abgegeben wird.

Als zweites Desinfektionsmittel kommen insbesondere in Betracht: Bromhydantoine, Chlorhydantoine, Brom-Chlor-Hydantoine, Paraformaldehyd und deren Mischungen. Dabei befindet sich die Quelle für das zweite Desinfektionsmittel vorzugsweise in einem Behältnis, zu dem die Vorspüllösung nur begrenzten Zugang hat. Hierdurch wird pro Zeiteinheit nur eine begrenzte Menge des zweiten Desinfektionsmittels gelöst und in den Hauptteil der Vorspüllösung abgegeben. Dabei stimmt man vorzugsweise das Behältnis für die Quelle des zweiten Desinfektionsmittels und die Löslichkeit des zweiten Desinfektionsmittels so aufeinander ab, daß sich in der Vorspüllösung eine im wesentlichen konstante Konzentration des zweiten Desinfektionsmittels einstellt. Vorzugsweise liegt diese im Bereich von etwa 0,5 bis etwa 10 ppm. Wählt man ein halogenhaltiges zweites Desinfektionsmittel, stimmt man das Behältnis für dessen Quelle und seine Löslichkeit vorzugsweise so aufeinander ab, daß sich in der Vorspüllösung eine im wesentlichen konstante Konzentration von etwa 0,5 bis etwa 2 ppm freies Halogen einstellt. Im Gegensatz zum bisherigen Stand der Technik sorgt man also dafür, daß das sich verbrauchende Desinfektionsmittel sich im Vorspültank immer wieder von selbst ergänzt, so daß seine Konzentration im wesentlichen konstant gehalten wird.

Das Behältnis für das zweite Desinfektionsmittel kann beispielsweise ein perforiertes Kunststoffgefäß, beispielsweise ein Polyethylengefäß darstellen. Es weist so viele und so große Löcher auf, daß die vorstehend genannten Bedingungen erfüllt werden. Die Quelle des zweiten Desinfektionsmittels kann jedoch auch mit einer Mémbran von der Vorspüllösung abgegrenzt sein, durch die Wasser und gelöstes zweites Desinfektionsmittel langsam diffundieren können.

Die Reinigungslösung selbst kann eine alkalische Reinigungslösung darstellen, wie sie im Stand der Technik, beispielsweise aus der EP-A 772 971 bekannt ist. Beispielsweise kann eine derartige alkalische Reinigungslösung enthalten: 0,05 ― 0,25 Gew.-% Alkalimetallhydroxid, 0,015 ― 0,07 Gew.-% anorganische Phosphate, berechnet als P₂O₅, und 0,01 ― 0,25 Gew.-% Komplexbildner für Calciumionen. Bevorzugte Komplexbildner sind Nitrilotriessigsäure, Gluconsäure und deren Mischungen. Ethylendiamintetraacetat ist ebenfalls einsetzbar, aus Umweltgründen jedoch weniger bevorzugt. Zusätzlich oder alternativ hierzu können als Komplexbildner Phosphonsäuren eingesetzt werden, beispielsweise Phosphonobutantricarbonsäure, Aminotrismethylenphosphonsäure sowie deren Homologe auf der Basis Ethylendiamin, Diethylentriamin und Hexamethylendiamin sowie 1-Hydroxyethan-1,1-diphosphonsäure. Vorzugsweise enthält die alkalische Reinigungslösung zusätzlich Tenside.

Die Reinigungslösung kann jedoch auch eine saure Reinigungslösung darstellen, wie sie in der deutschen Patentanmeldung 198 04 829.7-41 näher beschrieben ist. Vorzugsweise enthält diese saure Reinigungslösung eine Säure aus der Gruppe Phosphorsäure, Schwefelsäure, Amidosulfonsäure, Methansulfonsäure, Ameisensäure, Citronensäure und deren Gemische. Bevorzugt sind Säurekonzentrationen im Bereich von 0,1 ― 1,5 Gew.-% und insbesondere von 0,2 ― 0,6 Gew.-%. Weiterhin enthält die saure Reinigungslösung Tenside, vorzugsweise aus der Gruppe der nichtionischen Tenside, in Mengen zwischen 0,005 und 0,3 Gew.-%, vorzugsweise zwischen 0,01 und 0,2 Gew.-%.
Durch Mitverwendung von Tensiden wird die Fettentfernung erleichtert und die vollständige Benetzung aller Oberflächen beschleunigt. Grundsätzlich eignen sich Tenside aus allen bekannten Klassen, das heißt, nichtionische Tenside, anionische Tenside, kationische Tenside und amphotere Tenside. Auch Mischungen aus mehreren Tensiden aus einer Klasse oder aus mehreren Klassen können verwendet werden. Da im erfindungsgemäßen Verfahren meist auf Schaumarmut Wert gelegt wird, werden schaumarme Tenside, insbesondere nichtionische Tenside, bevorzugt verwendet. Von Bedeutung sind weiterhin Kombinationen aus nichtionischen Tensiden'und anionischen Tensiden und Kombinationen aus nichtionischen Tensiden und kationischen Tensiden.

Geeignete nichtionische Tenside sind insbesondere die Anlagerungsprodukte von 3 bis 20 Mol Ethylenoxid (EO) an primäre C₁₀ - C₂₀-Alkohole, wie zum Beispiel Kokos- oder Talgfettalkohole, an Oleylalkohol, an Oxoalkohole oder an sekundäre Alkohole dieser Kettenlänge. Ebenfalls geeignet sind die entsprechenden Ethoxylierungsprodukte anderer langkettiger Verbindungen, beispielsweise der Fettsäuren und der Fettsäureamide mit 12 bis 18 C-Atomen und der Alkylphenole mit 8 bis 16 C-Atomen im Alkylteil. In all diesen Produkten kann anstelle des Ethylenoxids zu einem gewissen Teil auch Propylenoxid (PO) angelagert sein. Weiterhin kann die endständige Hydroxylgruppe durch Veretherung mit geeigneten Alkylierungsmitteln, beispielsweise mit kurzkettigen Alkylhalogeniden, verschlossen sein. Als nichtionische Tenside eignen sich ferner langkettige Aminoxide oder Sulfoxide und auch die wasserlöslichen Alkylglykoside, deren hydrophober C₈ - C₂₀-Alkylrest mit einem meist oligomeren hydrophilen Glykosidrest glykosidisch verknüpft ist. Besonders bevorzugt werden als nichtionische Tenside Aningerungsprodukte aus Fettalkoholen mit 10 bis 20 C-Atomen und 3 bis 8 Mol Ethylenoxid sowie 2 bis 6 Mol Propylenoxid.

Als anionische Tenside eignen sich insbesondere Tenside vom Typ der Sulfonate und Sulfate, von denen die Sulfonattenside besonders bevorzugt werden. Zu den Tensiden vom Sulfonattyp gehören insbesondere die Alkylbenzolsulfonate mit einem C₁₂ - C₁₅-Alkylrest und Olefinsulfonate, wie man sic aus C₁₂ - C₁₈-Monoolefinen mit end- oder innenständiger Bindung durch Sulfonieren mit gasförmigem Schwefeltrioxid und anschließender alkalischer oder saurer Hydrolyse der Sulfonierungsprodukte erhält. Geeignet sind auch Alkansulfonate, die aus C₁₂ - C₁₈-Alkanen durch Sulfochlorierung oder Sulfoxidation und anschließende Hydrolyse oder durch Bisulfitaddition an Olefine erhältlich sind.

Geeignete Tenside vom Sulfattyp sind die Schwefelsäuremonoester von langkettigen primären Alkoholen natürlichen oder synthetischem Ursprungs, das heißt, von Fettalkoholen, wie z. B. Kokosfettalkoholen, Oleylalkohol, Lauryl-, Myristyl-, Palmityl oder Stearylalkohol oder den C₁₀ - C₂₀-Oxoalkoholen oder sekundären Alkoholen dieser Kettenlänge. Auch die Schwefelsäuremonoester der mit 1 bis 6 Mol Ethylenoxid (EO) ethoxylierten aliphatischen langkettigen primären Alkohole bzw. ethoxylierten sekundären Alkohole sind geeignet. Ebenso eignen sich die Salze langkettiger Ethercarbonsäuren, die beispielsweise durch Umsetzung langkettiger, mit 1 bis 10 Mol EO ethoxylierter Alkohole mit Chloressigsäure erhältlich sind.

Als kationische Tenside sind insbesondere die quartären Ammoniumverbindungen zu nennen, die am zentralen Stickstoff drei kurzkettige Alkylrest mit 1 bis 3 C-Atomen und einen langkettigen Alkylrest mit 12 bis 20 C-Atomen aufweisen. In besonderen Fällen können aber auch andere kationische Tenside, wie beispielsweise die Salze von langkettigen tertiären Aminen oder quartäre Ammoniumverbindungen, die zwei langkettige Reste oder einen Heterozyklus im Molekül aufweisen, verwendet werden.

Als amphotere Tenside eignen sich insbesondere die als Alkylbetaine und Sulfobetaine bekannten Verbindungen. Es handelt sich dabei um Derivate der Aminoessigsäure; der β-Aminopropionsäure oder der 3-Aminopropansulfonsäure, in denen der Stickstoff eine langkettige Alkyl- oder N-Acylaminoalkylgruppe sowie ein oder zwei kurzkettige Alkylgruppen, insbesondere Methyl-, Carboxymethyl- oder Hydroxyethylgruppen, trägt.

Besonders dann, wenn beabsichtigt ist, mit der Einwirkung der wäßrigen sauren Reinigungslösung auch eine stärkere mikrobizide Wirkung zu erreichen, kann es bevorzugt sein, besondere Tenside zu verwenden, die im sauren Milieu mikrobizid wirksam sind. Beispiele solcher Tenside sind die Alkylbenzolsulfonate, die langkettigen Ethercarbonsäuren und bestimmte quartäre Ammoniumverbindungen.

Der Gehalt an Tensiden beträgt in der erfindungsgemäß verwendeten wäßrigen sauren Reinigungslösung üblicherweise nicht mehr als etwa 0,5 Gew.-%. Vorzugsweise liegt der Gehalt zwischen etwa 0,005 und etwa 0,3 Gew.-%, insbesondere zwischen etwa 0,01 und etwa 0,2 Gew.-%, jeweils bezogen auf die angewandte Reinigungslösung als Ganzes. Vorzugsweise besteht mehr als die Hälfte des Gehaltes an Tensiden aus nichtionogenen Tensiden.

Zusätzlich können die wäßrigen sauren Reinigungslösungen weitere Wirkstoffe oder Hilfsstoffe enthalten, wenn dies im Einzelfall zweckmäßig oder gewünscht sein sollte. Beispiele derartiger Wirkstoffe sind Reinigungsverstärker und antimikrobielle Wirkstoffe. Als Hilfsstoffe sind beispielsweise Schauminhibitoren, Lösungsvermittler, Korrosionsinhibitoren und Farbstoffe zu erwähnen. Der Gehalt an derartigen zusätzlichen Wirk- und Hilfsstoffen hängt von der gewünschten Wirkung ab und wird vom Fachmann in an sich bekannter Weise festgelegt. Als Beispiele derartiger Zusatzstoffe seien Octylphosphonsäure, Phosphonate, Cumolsulfonat, Xylolsulfonat und Octylslfonat genannt. Die zur Reinigung verwendeten sauren Lösungen sind vorzugsweise frei von Enzymen und/oder peroxidischen Verbindungen.

Im erfindungsgemäßen Verfahren wird die Menge an saurer oder alkalischer Reinigungslösung in Abhängigkeit von der Größe der zu reinigenden Geräte so gewählt, daß unter allen Umständen alle zu reinigenden Oberflächen dieser Geräte von der Reinigungslösung erreicht werden. Die Einwirkzeiten bestimmen in gewissen Grenzen den Reinigungserfolg und werden entsprechend eingestellt. Da die Reinigungsleistung mit der Temperatur ansteigt, reichen bei höheren Temperaturen der Reinigungslösung kürzere Zeiten als bei Raumtemperatur für eine vollständige Reinigung aus. Daneben wirken sich mechanische Effekte, wie die Verwirbelung der Reinigungslösung und die Durchströmgeschwindigkeit der Reinigungslösung, auf das Reinigungsergebnis aus. Die genauen Einwirkzeiten werden dehalb in jedem Einzelfall empirisch bestimmt. Bei Anwendung herkömmlicher Reinigungsautomaten reichen in der Regel Einwirkzeiten von wenigen Minuten bei Temperaturen zwischen etwa 50 und etwa 90 °C für eine vollständige Reinigung aus.

Das erfindungsgemäße Verfahren kann grundsätzlich allein von Hand ausgeführt und gesteuert werden. Vorzugsweise wird es aber weitgehend automatisch mit Hilfe geeigneter Reinigungsapparaturen durchgeführt, wie sie beispielsweise in US 5,405,452 und EP 772 971 beschrieben sind. Die zur Reinigung, zum Spülen und gegebenenfalls zum Desinfizieren verwendeten Flüssigkeiten werden dabei mit Hilfe geeigneter Rohrleitungen, Ventile und Pumpen durch die zu reinigenden Geräte, insbesondere Melkanlagen, hindurchgepumpt und dort entweder für eine bestimmte Zeit belassen oder für eine Zeit im Kreislauf umgewälzt, bis das gewünschte Ergebnis erreicht ist. Auf eine genauere Beschreibung geeigneter Reinigungsautomaten wird daher unter ausdrücklichem Hinweis auf die Offenbarung der beiden obengenannten Druckschriften an dieser Stelle verzichtet. In jedem Falle wird das Verfahren so geführt, daß die wäßrige Reinigungslösung wenigstens zum Teil beim nächsten Reinigungsgang erneut verwendet wird. Vorzugsweise werden mehr als 80 %, insbesondere mehr als 90 % der eingesetzten wäßrigen Reinigungslösung wieder im Stapeltank aufgefangen und erneut bei der nächsten Reinigung verwendet. Soweit nötig, wird die Lösung von Zeit zu Zeit durch Zusatz von Säure bzw. Lauge oder Reinigungsmittel und Wasser ergänzt.

Nach dem Ablassen der wäßrigen Reinigungslösung aus den zu reinigenden Melkanlagen oder Geräten werden diese mit Wasser nachgespült. In der Regel wird hierfür Leitungswasser verwendet, wenn dies mit genügender Keimfreiheit zur Verfügung steht, andernfalls wird das Leitungswasser in der notwendigen Weise aufbereitet und/oder gereinigt. Die Menge an Spülwasser wird so gewählt, daß alle störenden Rückstände der wäßrigen Reinigungslösung aus den Geräten entfernt werden. Für den Fall, daß eine weitere Behandlung der Melkanlage mit einer ersten Desinfektionslösung vorgesehen ist, werden selbstverständlich an die Qualität des Spülwassers geringere Anforderungen gestellt. Das aus den Geräten ablaufende Spülwasser wird in einem geeigneten Tank aufgefangen und zum Vorspülen der Geräte vor der Einwirkung der wäßrigen Reinigungslösung verwendet.

Wenn besondere Anforderungen an die Keimfreiheit der Melkanlagen oder Geräte gestellt werden, kann es zweckmäßig sein, nach dem soeben beschriebenen Spülgang eine Behandlung der Anlagen oder Geräte mit einer eigenen (ersten) Desinfektionslösung vorzusehen. Diese Lösung enthält an sich bekannte Desinfektionsstoffe, vorzugsweise in wäßriger Lösung. Die Auswahl der Wirkstoffe richtet sich nach dem zu bekämpfenden Keimspektrum und der gewünschten Desinfektionsgeschwindigkeit. Vorzugsweise werden toxikologisch unbedenkliche Desinfektionswirkstoffe eingesetzt, die bereits in niedriger Konzentration bei Raumtemperatur eine schnelle Desinfektion gewährleisten. Besonders bewährt haben sich für die Desinfektion von Melkanlagen verdünnte wäßrige Lösungen von Peressigsäure, wie man sie beispielsweise durch Verdünnen geeigneter handelsüblicher Konzentrate mit Wasser erhält. Derartige Konzentrate enthalten neben Peressigsäure in der Regel Essigsäure, Wasserstoffperoxid sowie mehr oder weniger große Mengen an Mineralsäure, insbesondere Schwefelsäure, sowie Wasser. Zur Anwendung werden sie soweit verdünnt, daß in der angewendeten Desinfektionslösung vorzugsweise etwa 0,005 Gew.-% bis etwa 0,1 Gew.-% an Peressigsäure vorliegen. Die Menge an Desinfektionslösung wird wiederum so gewählt, daß alle zu desinfizierenden Oberflächen der Geräte im ausreichenden Maße erreicht werden. Die aus den Geräten abfließende Desinfektionslösung kann verworfen werden, doch besteht auch die Möglichkeit, sie zusammen mit den Spülwässern gegebenenfalls in dem Tank zu stapeln, dessen Inhalt zur Vorspülung vor dem eigentlichen Reinigungsgang verwendet wird.

An den Desinfektionsschritt schließt sich nochmals ein Spülgang an, um Reste des ersten Desinfektionsmittels aus der Anlage zu entfernen. Die Spülung erfolgt mit Wasser, wobei an die Qualität des Wassers die bereits oben genannten Anforderungen zu stellen sind. Auch das hier ablaufende Spülwasser kann gegebenenfalls zur Vorspülung wieder verwendet werden.

### Ausführungsbeispiel

**Folgender Versuchsablauf wurde gemacht:**
a) Vorspülung mit Nachspülwasser
   alkalische Reinigung
   Zwischenspülung
   Desinfektion mit Peressigsäure als erstem Desinfektionsmittel
   Nachspülung mit Frischwasser
   Rückführung des Nachspülwassers in den Vorspültank
b) wie a, nur anstelle eines alkalischen Reinigers wurde ein saures Reinigungsmittel verwendet
c) wie b, nur unter Zusatz des zweiten Desinfektionsmittels (Brom-Chlor-Hydrantoin) zum Vorspültank.

Der Vorspülwasserbehälter hat ein Volumen von 120 l, enthalten sind etwa 70 ― 80 l Wasser. Über einen Versuchszeitraum von jeweils 6 Wochen wurde der Hygienestatus des Vorspülwassers und des Behälters visuell und auch mittels ATP-Messung (UNI-Lite Xcel-Meßgerät, Clean-Trace-Rapid Cleanliness Test, Aqua-Trace Single-shot Water Test, Total ATP) beobachtet. Weiterhin wurde der Belagsaufbau in der Melkanlage an Milchmengenmessern (sog. Metatronmilchmengenmesser) beobachtet.

Im Fall c) wurden 2 perforierte 500 ml Weithalspolyethylen-Flachen mit einem zweiten Desinfektionsmittel in Brikettform (je 15 Briketts ä 12,5 g) gefüllt und in den Vorspülbehälter gestellt. Diese Menge reichte für einen Zeitraum von ca. 14 Tagen. Die Konzentration an freiem Halogen betrug 0,5 ― 1,8 ppm freies Halogen, gemessen mit einem Dr. Lange-Photometer (Typ LP 1W und dem Dr. Lange Küvettentest LCK 310).

### Resultat:

Im Falle a + b waren der Vorspülwasserbehälter, das Vorspülwasser sowie die Metatronmilchmengenmesser deutlich verschmutzt; im Falle c war noch alles sauber. Das belegten auch die ATP-Messungen.

| | **Versuch a** | **Versuch b** | **Versuch c** |
|---|---|---|---|
| Leitungswasser | 24 RLU | 23 RLU | 24 RLU |
| Vorspülwasser | 135 RLU | 122 RLU | 41 RLU |
| Metatronmilchmengenmesser | 284 RLU | 198 RLU | 47 RLU |
| (RLU = Relative light units) | | | |

## Patentansprüche

1. Verfahren zur Reinigung von Melkanlagen unter Verwendung einer Vorspüllösung und einer wäßrigen Reinigungslösung, bei dem diese wäßrige Reinigungslösung wenigstens zum Teil nach erfolgter Reinigung der Anlage aufgefangen und nach erneutem Gebrauch der Melkanlage wiederum zur Reinigung verwendet wird und bei dem nach dem Reinigungsschritt mit Spülwasser und fakultativ mit einer Lösung eines ersten Desinfektionsmittels nachgespült wird, Spülwasser und, falls verwendet, erste Desinfektionsmittellösung jeweils wenigstens zum Teil in einem Vorspültank aufgefangen und im nächsten Reinigungszyklus als die genannte Vorspüllösung verwendet werden, **dadurch gekennzeichnet, daß** man in diese Vorspüllösung im Vorspültank eine Quelle für ein zweites Desinfektionsmittel einbringt, aus der eine im wesentlichen konstante Menge zweites Desinfektionsmittel pro Zeiteinheit in die Vorspüllösung abgegeben wird.

2. Verfahren nach Anspruch 1, **dadurch gekennzeichnet, daß** das zweite Desinfektionsmittel ausgewählt ist aus Bromhydantoinen, Chlorhydantoinen, Brom-Chlor-Hydantoinen und aus Paraformaldehyd.

3. Verfahren nach einem oder beiden der Ansprüche 1 und 2, **dadurch gekennzeichnet, daß** sich die Quelle für das zweite Desinfektionsmittel in einem Behältnis befindet, zu dem die Vorspüllösung nur begrenzten Zugang hat.

4. Verfahren nach Anspruch 3, **dadurch gekennzeichnet, daß** das Behältnis für die Quelle des zweiten Desinfektionsmittels und die Löslichkeit des zweiten Desinfektionsmittels so aufeinander abgestimmt werden, daß sich in der Vorspüllösung eine im wesentlichen konstante Konzentration des zweiten Desinfektionsmittels im Bereich von 0,5 bis 10 ppm einstellt.

5. Verfahren nach einem oder mehreren der Ansprüche 1 bis 4, **dadurch gekennzeichnet, daß** die Reinigungslösung eine alkalische Reinigungslösung darstellt.

6. Verfahren nach Anspruch 5, **dadurch gekennzeichnet, daß** die Reinigungslösung 0,05 bis 0,25 Gew.-% Alkalimetallhydroxid, 0,015 bis 0,07 Gew.-% anorganische Phosphate, berechnet als P₂O₅, und 0,01 bis 0,25 Gew.-% Komplexbildner für Calciumionen enthält.

7. Verfahren nach einem oder mehreren der Ansprüche 1 bis 4, **dadurch gekennzeichnet, daß** die Reinigungslösung eine saure Reinigungslösung darstellt.

8. Verfahren nach Anspruch 7, **dadurch gekennzeichnet, daß** die saure Reinigungslösung eine Säure aus der Gruppe Phosphorsäure, Schwefelsäure, Amidosulfonsäure, Methansulfonsäure, Ameisensäure, Citronensäure und deren Gemische vorzugsweise in Mengen von 0,1 bis 1,5 Gew.-%, insbesondere von 0,2 bis 0,6 Gew.-%, und Tenside, vorzugsweise aus der Gruppe der nichtionischen Tenside, in Mengen zwischen 0,005 und 0,3 Gew.-%, vorzugsweise zwischen 0,01 und 0,2 Gew.-% enthält.

## Claims

1. Method of cleaning milking units by using a pre-rinsing solution and an aqueous cleaning solution, whereby said aqueous cleaning solution at least partially is collected after cleaning of the unit, and after a repeated use of the milking devise is reused for cleaning, whereby after the cleaning step with rinsing water, and, optionally, after post-rinsing with a solution of a first disinfectant, the rinsing water and, if used, the first disinfectant solution, are collected at least partially in a pre-rinsing tank, and are used in the next cleaning cycle as said pre-rinsing solution, **characterized in that** a source for a second disinfectant is poured in the pre-rinsing solution present in the pre-rinsing tank, out of which per period of time a substantially constant amount of disinfectant is released.

2. Method according to claim 1, **characterized in that** the second disinfectant is selected from bromo hydantoins, chloro hydantoins, bromo chloro hydantoins and para formaldehyde.

3. Method according to one or two of the claims 1 and 2, **characterized in that** the source of the second disinfectant is present in a container to which the pre-rinsing solution has limited access.

4. Method according to claim 3, **characterized in that** the container in which the source of the second disinfectant is present and the solubility of the second disinfectant are adjusted so that the pre-treatment solution comprises a substantially constant concentration of from 0,5 to 10 ppm of the second disinfectant.

5. Method according to one or more of the claims 1 to 4, **characterized in that** the cleaning solution is an alkaline cleaning solution.

6. Method according to claim 5, **characterized in that** the cleaning solution comprises 0,05 to 0,25 wt-% alkali metal hydroxide, 0,015 to 0,07 wt-% anorganic phosphates calculated as P₂O₅, and 0,01 to 0,25 wt-% of a complexing agent for calcium ions.

7. Method according to one or more of the claims 1 to 4, **characterized in that** the cleaning solution is an acid cleaning solution.

8. Method according to claim 7, **characterized in that** the acid cleaning solution comprises an acid selected from phosphorous acid, sulfuric acid, amidosulfuric acid, methanesulfonic acid, formic acid, citric acid and mixtures thereof, preferably in an amount of from 0,1 to 1,5 wt-%, more preferred of from 0,2 to 0,6 wt-%, and surfactants, preferably from the group of non-ionic surfactants, in an amount between 0,005 to 0,3 wt-%, preferably between 0,01 to 0,2 wt-%.

## Revendications

1. Procédé pour le nettoyage des machines à traire utilisant une solution de prélavage et une solution de nettoyage aqueuse, dans lequel cette solution de nettoyage aqueuse est au moins en partie recueillie une fois le nettoyage de la machine réalisé et est, à nouveau, utilisée au terme d'une nouvelle utilisation de la machine à traire et dans lequel on procède à un lavage ultérieur, après l'étape de lavage, à l'aide d'eau de rinçage et éventuellement à l'aide d'une solution se composant d'un premier désinfectant, l'eau de rinçage, et la solution du premier désinfectant, si elle est utilisée, sont, à chaque fois, recueillies au moins en partie dans un réservoir de prélavage et elles sont utilisées lors du cycle de nettoyage suivant sous la forme de ladite solution de prélavage, **caractérisé en ce que** l'on place dans cette solution de prélavage stockée dans le réservoir de prélavage une source destinée à un second désinfectant, source depuis laquelle une quantité en général constante de ce second désinfectant par unité de temps s'écoule dans la solution de prélavage.

2. Procédé selon la revendication 1, **caractérisé en ce que** le second désinfectant est choisi parmi les bromo-hydantoïnes, les chloro-hydantoïnes, les bromo-chloro-hydantoïnes et le paraformaldéhyde.

3. Procédé selon l'une quelconque des revendications 1 et 2, **caractérisé en ce que** la source pour le second désinfectant se trouve dans un réservoir, vers lequel la solution ne dispose que d'un accès réduit.

4. Procédé selon la revendication 3, **caractérisé en ce que** le réservoir destiné à la source du second désinfectant et la solubilité du second désinfectant sont fixés l'un par rapport à l'autre de telle sorte qu'une concentration en général constante du second désinfectant, située dans une plage de 0,5 à 10 ppm soit utilisée dans la solution de prélavage.

5. Procédé selon l'une quelconque des revendications 1 à 4, **caractérisé en ce que** la solution de nettoyage représente une solution de nettoyage alcaline.

6. Procédé selon la revendication 5, **caractérisé en ce que** la solution de nettoyage comprend entre 0,05 et 0,25 % en poids d'hydroxyde de métal alcalin, entre 0,015 et 0,07 % en poids de phosphate inorganique, défini en tant que P₂O_{5,} et entre 0,01 et 0,25 % en poids de complexant pour des ions calcium.

7. Procédé selon l'une quelconque des revendications 1 à 4 **caractérisé en ce que** la solution de nettoyage constitue une solution de nettoyage acide.

8. Procédé selon la revendication 7, **caractérisé en ce que** la solution de nettoyage acide comprend un acide choisi dans le groupe de l'acide phosphorique, de l'acide sulfurique, de l'acide amidosulfonique, l'acide méthane sulfonique, l'acide formique, l'acide citrique et leurs mélanges, de préférence selon des proportions allant de 0,1 à 1,5 % en poids, notamment de 0,2 à 0,6 % en poids et un détergent de préférence choisi dans le groupe des détergents non ioniques, selon des proportions allant de 0,005 à 0,3 % en poids, de préférence de 0,01 à 0,2 % en poids.
